Europäisches Patentamt

(19) European Patent Office

Office européen des brevets

(11) Numéro de publication: **0 060 006**
**B1**

(12) **FASCICULE DE BREVET EUROPEEN**

(45) Date de publication du fascicule du brevet:
21.11.84

(21) Numéro de dépôt: **82200262.2**

(22) Date de dépôt: **03.03.82**

(51) Int. Cl.³: **H 04 Q 3/00**

(54) **Détecteur de boucle peu sensible aux tensions longitudinales.**

(30) Priorité: **11.03.81 FR 8104850**

(43) Date de publication de la demande:
**15.09.82 Bulletin 82/37**

(45) Mention de la délivrance du brevet:
**21.11.84 Bulletin 84/47**

(84) Etats contractants désignés:
**BE CH DE FR GB LI SE**

(56) Documents cités:
**EP - A - 0 011 720**
**EP - A - 0 017 763**
**DE - A - 2 918 270**
**FR - A - 2 324 181**
**FR - A - 2 324 183**

(73) Titulaire: **TELECOMMUNICATIONS RADIOELECTRIQUES ET TELEPHONIQUES T.R.T., 88, rue Brillat Savarin, F-75013 Paris (FR)**

(72) Inventeur: **Forestier, Alain, SOCIETE CIVILE S.P.I.D. 209 rue de l'Université, F-75007 Paris (FR)**

(74) Mandataire: **Chaffraix, Jean et al, Société Civile S.P.I.D. 209, rue de l'Université, F-75007 Paris (FR)**

BUNDESDRUCKEREI BERLIN

## Description

L'invention concerne un détecteur de boucle utilisé dans un équipement de ligne d'abonné muni d'un pont d'alimentation dans l'une des branches duquel une dissymétrie peut être ou ne pas être introduite selon la valeur d'un signal de commande, ledit détecteur de boucle comportant un détecteur différentiel dont une entrée est connectée à l'une des bornes du pont à partir desquelles lesdites branches sont reliées à la batterie centrale et dont la sortie fournit un signal logique dont les états indiquent l'ouverture ou la fermeture de la boucle, ledit détecteur de boucle comportant un comparateur dont une entrée est portée à un seuil de tension.

Le brevet allemand n° 2 918 270 décrit un circuit du même genre qui réagit à la variation du courant continu de ligne ou courant transversal en cas de mise à la terre de la ligne. Ce circuit sert de plus au contrôle de l'isolation de ligne.

Lors du fonctionnement en détecteur de boucle, le circuit de détection réagit à l'établissement ou à l'interruption dudit courant transversal. Ce courant transversal peut être perturbé par les courants parasites longitudinaux induits sur la ligne aux fréquences industrielles et qui sont de même sens à un instant donné dans les deux fils de ligne. En traversant le pont d'alimentation, les courants longitudinaux s'ajoutent ainsi au courant transversal dans l'une de ses branches et s'en retranchent dans l'autre. Il s'ensuit que si le pont est symétrique, c'est-à-dire si les deux branches ont la même résistance, les tensions aux deux bornes du pont d'alimentation augmentent également l'une et l'autre. Le circuit de ladite demande de brevet allemand, utilisé comme détecteur de boucle, ne prévient par toujours — en cas de présence des courants longitudinaux — la possibilité de donner une indication erronée de l'état de la boucle.

Le but de l'invention est de proposer un détecteur de boucle peu sensible aux courants longitudinaux, lorsqu'une dissymétrie est introduite dans le pont d'alimentation et qui permet ainsi de réaliser l'économie résultant de la modification du circuit résistif d'une seule branche du pont, par exemple en cas de »faux appel« sans pour autant abandonner la détection différentielle sur un pont symétrique de faible valeur ohmique.

Conformément à l'invention un tel dispositif est caractérisé en ce que les deux bornes du pont sont connectées aux entrées inverseuse et non-inverseuse du détecteur différentiel, en ce que l'autre entrée du comparateur est reliée, à travers un filtre passe-bas déterminé pour supprimer pratiquement l'influence des courants longitudinaux induits sur la ligne aux fréquences industrielles, à ladite borne du pont appartenant à ladite branche dans laquelle une dissymétrie peut être ou ne pas être introduite, et en ce que un dispositif logique est prévu dont les première et seconde entrées sont connectées, respectivement, à la sortie du détecteur différentiel et à la sortie du comparateur, et dont la troisième entrée reçoit ledit signal de commande pour sélectionner comme signal de boucle de la ligne d'abonné soit le signal de sortie du détecteur différentiel, soit le signal de sortie du comparateur selon que ledit signal de commande met le pont d'alimentation dans son état symétrique ou dans son état dissymétrique.

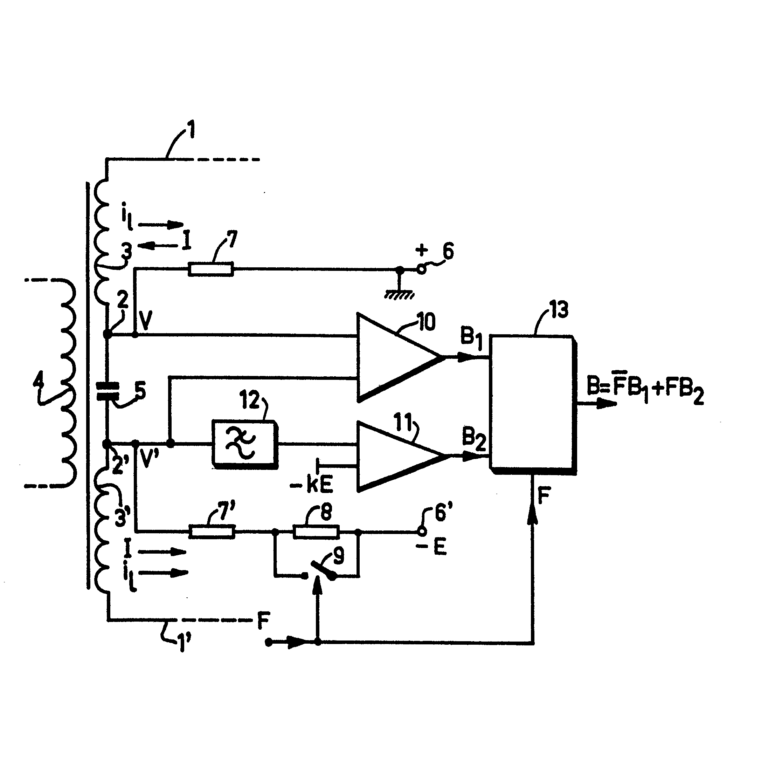

La description suivante en regard du dessin annexé, le tout donné à titre d'exemple fera bien comprendre comment l'invention peut être réalisée.

La figure unique représente le schéma du détecteur de boucle conforme à l'invention.

Sur cette figure, les fils 1 et 1' d'une ligne d'abonné aboutissent respectivement aux bornes 2 et 2' du pont d'alimentation à travers les demi-enroulements 3 et 3' du transformateur dont l'enroulement 4 transmet au central les courants de conversation. Les bornes 2 et 2' sont d'une part interconnectées par le condensateur 5 dont la valeur C doit être suffisante pour établir un quasi court-circuit aux fréquences vocales et d'autre part reliées à travers l'une et l'autre branche du pont d'alimentation aux bornes positive 6 et négative 6' de la batterie centrale, la borne positive 6 étant reliée à la masse et la borne négative 6' étant au potentiel — E. La branche connectée entre les bornes 2 et 6 et la branche connectée entre les bornes 2' et 6' comportent respectivement des circuits résistifs identiques 7 et 7' de valeur $R_1$, une résistance additionnelle 8 de valeur $R_2$ se trouvant montée en série avec le circuit résistif 7' dans la branche 2'—6'. Un dispositif interrupteur électromécanique ou électronique 9 commandé par le signal logique F transmis par le central est connecté aux bornes de la résistance 8 afin de rendre le pont symétrique ou dissymétrique. Le détecteur de boucle connu formé par le détecteur différentiel 10 dont les entrées sont connectées aux bornes 2 et 2' du pont fournit en sortie le signal logique $B_1$.

Pour la valeur du signal de commande F qui provoque la fermeture de l'interrupteur 9, le pont est symétrique et la différence de potentiel à ses bornes est pratiquement insensible aux effets des courants longitudinaux qui s'annulent dans ses deux branches. Les états du signal de sortie $B_1$ du détecteur différentiel indiquent correctement l'ouverture ou la fermeture de la boucle. Si la valeur du signal de commande F produit l'ouverture de l'interrupteur 9, la résistance 8 est introduite dans le pont qui devient dissymétrique. Si l'on désigne par V et V' les potentiels aux bornes 2 et 2' du pont respectivement, par I le courant continu de ligne et par $i_l$ le courant longitudinal de valeur maximum $I_l$ induit dans la ligne à une fréquence industrielle de pulsation $\omega$, la différence de potentiel aux bornes du pont résultant de la chute ohmique dans ses branches s'écrit à l'instant t:

$$V - V' = E - (2 R_1 + R_2) I - R_2 I_i e^{j\omega t}.$$

On observe que la composante alternative est importante si la valeur de $R_2$ doit être grande. Mais l'expression ci-dessus ne tient pas compte de la présence du condensateur 5 de valeur C qui du point de vue alternatif se trouve disposé en parallèle sur la résistance 8 de sorte que l'expression de la différence de potentiel alternative aux bornes du pont est en réalité:

$$\frac{R_2}{\sqrt{1 + R_2^2 C^2 \omega^2}} I_i e^{j\omega t}.$$

Cette expression montre que la dissymétrie du pont est partiellement atténuée par l'influence du condensateur de liaison des demi-enroulements du transformateur mais insuffisamment pour rendre la détection différentielle de la boucle pratiquement insensible aux courants longitudinaux. Afin de pouvoir adopter la solution économique du pont dissymétrique lorsque par exemple en cas de »faux appel« la résistance 8 est introduite dans la branche 2'—6', la présente invention associe au détecteur différentiel 10 un comparateur 11 dont une entrée est reliée à la borne 2' du pont d'alimentation à travers un filtre passe-bas 12 et dont l'autre entrée est portée à un seuil de tension — kE proportionnel à la tension de batterie, le coefficient de proportionnalité k dépendant de la chute ohmique dans la branche 2'—6' du pont. La sortie du comparateur 11 fournit le signal logique $B_2$. Les signaux logiques F, $B_1$, $B_2$ sont transmis à un dispositif logique 13 qui réalise la fonction logique $B = \bar{F}B_1 + FB_2$. De cette manière, la boucle est correctement détectée par le signal de sortie du détecteur différentiel lorsque le pont est symétrique et par le signal de sortie du comparateur lorsque le pont devient dissymétrique; la détection est pratiquement insensible à l'influence des courants longitudinaux dans le premier cas en raison de la symétrie du pont et dans le second cas grâce à l'efficacité du filtre passe-bas 12 dont la fréquence de coupure est de quelques Hertz.

Il faut noter que le détecteur différentiel 10 qui est actif dans le cas du fonctionnement normal d'une ligne d'abonné doit avoir un temps de retard suffisamment faible, de l'ordre de quelques millisecondes, afin de pouvoir détecter les ruptures de boucles dues à la numérotation. Par contre le comparateur 11 qui entre en action lors d'une situation anormale risquant de se prolonger un certain temps, par exemple en cas de »faux appel« peut admettre un temps de réponse élevé.

## Revendication

1. Détecteur de boucle utilisé dans un équipement de ligne d'abonné muni d'un pont d'alimentation (7, 7', 8) dans l'une des branches duquel une dissymétrie peut être ou ne pas être introduite selon la valeur d'un signal de commande (F), ledit détecteur de boucle comportant un détecteur différentiel (10) dont une entrée est connectée à l'une des bornes (2 ou 2') du pont à partir desquelles lesdites branches sont reliées à la batterie centrale et dont la sortie fournit un signal logique ($B_1$) dont les états indiquent l'ouverture ou la fermeture de la boucle, ledit détecteur de boucle comportant un comparateur (11) dont une entrées est portée à un seuil de tension (—KE), caractérisé en ce que les deux bornes (2, 2') du pont sont connectées aux entrées inverseuse et non-inverseuse du détecteur différential (10), en ce que l'autre entrée du comparateur (11) est reliée, à travers un filtre passe-bas (12) déterminé pour supprimer pratiquement l'influence des courants longitudinaux induits sur la ligne aux fréquences industrielles, à ladite borne (2') du pont appartenant à ladite branche dans laquelle une dissymétrie peut être ou ne pas être introduite, et en ce que un dispositif logique (13) est prévu dont les première et seconde entrées sont connectées, respectivement, à la sortie du détecteur différentiel (10) et à la sortie du comparateur (11), et dont la troisième entrée reçoit ledit signal de commande (F) pour sélectionner comme signal de boucle de la ligne d'abonné soit le signal de sortie ($B_1$) du détecteur différentiel, soit le signal de sortie ($B_2$) du comparateur selon que ledit signal de commande (F) met le pont d'alimentation dans son état symétrique ou dans son état dissymétrique.

## Patentanspruch

Schleifendetektor für eine Teilnehmerleitungsanordnung mit einer Speisebrücke (7, 7', 8), in deren einem Zweig gegebenenfalls eine Asymmetrie abhängig von dem Wert eines Steuersignals (F) auftreten kann, wobei der genannte Schleifendetektor einen Differenzdetektor (10) enthält, von dem ein Eingang mit einer der Klemmen (2 oder 2') der Brücke verbunden ist, von der aus die genannten Zweige mit der zentralen Batterie verbunden sind, und dessen Ausgang ein logisches Signal ($B_1$) liefert, dessen Zustände den offenen oder geschlossenen Zustand der Schleife angeben, wobei der genannte Schleifendetektor eine Vergleichsschaltung (11) enthält, von der ein Eingang mit einer Spannungsschwelle (—KE) verbunden ist, dadurch gekennzeichnet, daß die zwei Klemmen (2, 2') der Brücke mit je einem invertierenden bzw. nicht-invertierenden Eingang des Differenzdetektors (10) verbunden sind, daß der andere Eingang der Vergleichsschaltung (11) mittels eines Tiefpaßfilters (12) zum Unterdrücken des Einflusses der Längsströme, die mit Betriebsfrequenzen in die Leitung eingestreut sind, mit der genannten Klemme (2') der Brücke verbunden ist, die dem genannten Zweig in den gegebenenfalls eine Asymmetrie eingeführt werden kann, zugeordnet ist, und daß eine logische Schaltung (13) vorgesehen ist, deren erster und zweiter Eingang mit dem Ausgang des Differenzdetektors (10) bzw. mit dem Ausgang der Vergleichsschaltung (11) verbunden sind und deren dritter Eingang das genannte Steuersignal (F) erhält, um als Teilnehmerleitungsschleifensignal entweder das Ausgangssignal (B$_1$) des Differenzdetektors oder das Ausgangssignal (B$_2$) der Vergleichsschaltung auszuwählen, abhängig davon, ob das genannte Steuersignal (F) die Speisebrücke in den symmetrischen oder in den asymmetrischen Zustand bringt.

## Claim

A loop detector for use in a subscriber line interface circuit, comprising a transmission bridge (7, 7′, 8) in one of whose branches an asymmetrie may be introduced or not introduced depending on the value of a control signal (F), said loop detector comprising a difference detector (10) one input of which is connected to one of the terminals (2 or 2′) of the bridge from where the said branches are connected to the central battery and whose output supplies a logic signal (B$_1$) whose states indicate opening or closing of the loop, said loop detector comprising a comparator (11) one input of which is connected to a voltage threshold ($-KE$), characterized in that the two terminals (2, 2′) of the bridge are connected to the inverting and non-inverting inputs of the difference detector (10), that the other input of the comparator (11), via a low-pass filter (12) which has for its function to substantially suppress the influence of common-mode voltages induced on the line at industrial frequencies is connected to said terminal (2′) belonging to said branch in which an asymmetry may be introduced or not introduced, and that a logic device (13) is provided whose first and second inputs are connected to the output of the difference detector (10) and to the output of the comparator (11), respectively und whose third input receives said control signal (F) for selecting as a loop signal of the subscriber line either the output signal (B$_1$) of the difference detector or the output signal (B$_2$) of the comparator, according as said control signal (F) adjusts the transmission bridge to its symmetrical or its asymmetrical state.

$$B = \overline{F}B_1 + FB_2$$